# EUROPÄISCHE PATENTANMELDUNG

(11) **EP 3 767 899 A1**
(43) Veröffentlichungstag der Anmeldung: **20.01.2021**
(21) Anmeldenummer: 19186769.6
(22) Anmeldetag: 17.07.2019
(51) Int. Cl.: H04L 12/715

(54) **VERFAHREN ZUR DATENKOMMUNIKATION, NETZWERK, COMPUTERPROGRAMM UND COMPUTERLESBARES MEDIUM**

(71) Anmelder: Siemens Aktiengesellschaft, 80333 München (DE)
(72) Erfinder: Steindl, Günter, 92284 Poppenricht (DE)

(57) **Zusammenfassung**

Die Erfindung betrifft ein Verfahren zur Datenkommunikation in einem Netzwerk, das mehrere Domains (1-6) umfasst, wobei jeder Domain (1-6) ein Domain-Kenner (10) zugeordnet ist, und jeder Domain (1-6) ein Domain-Manager (11, 24) zugeordnet ist, dem ein Domain-Manager-Kenner (12) zugeordnet ist, und die Teilnehmer (7-9) der Domains (1-6) die Domain-Kenner (10) und die Domain-Manager-Kenner (12) ihrer Domain (1-6) jeweils mit benachbarten Teilnehmern (7-9) austauschen, und die Domain-Manager (11, 24) die von den Teilnehmern (7-9) ihrer Domain (1-6) gespeicherten Teilnehmer-Nachbar-Informationen (14) erfassen und so die Domain-Manager-Kenner (12) der Domain-Manager (11, 24) benachbarter Domains (1-6) erhalten und unter Nutzung der erhaltenen Domain-Manager-Kenner (12) mit benachbarten Domain-Managern (11, 24) kommunizieren und Manager-Nachbar-Informationen (17) austauschen, wobei die Domain-Manager (11, 24) benachbarten Domain-Managern (11, 24) jeweils ihren eigenen Domain-Kenner (10) und eine Information ob, und wenn ja, welche weiteren Domains (1-6) der jeweilige Nachbar über den jeweiligen Domain-Manager (11, 24) erreichen kann, mitteilen, und die Manager-Nachbar-Informationen (17) genutzt werden, um wenigstens einen Pfad (P) zwischen zwei in verschiedenen Domains (1-6) befindlichen Teilnehmern (7-9) zu finden. Darüber hinaus betrifft die Erfindung ein Netzwerk, ein Computerprogramm und ein computerlesbares Medium.

## Beschreibung

Die Erfindung betrifft ein Verfahren zur Datenkommunikation einem insbesondere industriellen Netzwerk, das mehrere Domains umfasst bzw. in mehrere Domains unterteilt ist. Darüber hinaus betrifft die Erfindung ein Netzwerk, ein Computerprogramm und ein computerlesbares Medium.

In industriellen Automatisierungssystemen sind in der Regel eine Vielzahl von Komponenten, etwa eine oder mehrere Steuerungen, verteilte Feldgeräte wie IO-Geräte, die etwa Sensoren und/oder Aktoren umfassen bzw. mit solchen verbunden sind, Peripheriegeräte etc., miteinander kommunikativ über ein Netzwerk verbunden. In einem industriellen Netzwerk kann die Kommunikation beispielsweise gemäß dem unter der Bezeichnung PFOFINET bekannten Kommunikationsprotokoll abgewickelt werden. PROFINET (process field network) ist der offene Industrial-Ethernet-Standard der PROFIBUS-Nutzerorganisation e. V. (PNO) für die Automatisierung.

Der Datenaustausch zwischen der oder den Steuerung(en), und den verteilten Feldgeräten erfolgt in der Regel über eine zyklische Kommunikation, wobei Datenpakete zyklisch insbesondere in Echtzeit übertragen werden.

In der IEEE sind durch die Erweiterungen der Arbeitsgruppe TSN (Time-Sensitive Networking) periodische bzw. zyklische Übertragungen, so genannte Streams, im Netzwerk besonders geschützt. Die TSN-Arbeitsgruppe (Time Sensitive Networking Taskgroup) ist dabei eine Nachfolgegruppe der AVB-Arbeitsgruppe (Audio/Video Bridging Taskgroup). Zu TSN gehört eine Vielzahl von Standards, rein beispielhaft sei in diesem Zusammenhang genannt Zeitsynchronisation (IEEE 802.1 AS-REV), Framepreemption (IEEE 802.1 Q-2018) und Reservierung (IEEE 802.1 Q-2018, IEEE 802.1 Qcc). Bekannt ist auch das Stream Reservation Protocol (SRP, siehe IEEE 802.1 Q-2018), mit dem Übertragungsressourcen dynamisch reserviert werden können und es möglich wird, maximale Latenzzeiten zu ermitteln. Durch eine automatische Konfiguration von SRP kann für Streams mit einer erfolgreichen Reservierung insbesondere eine gesicherte Übertragung innerhalb einer bestimmten maximalen Latenz garantiert werden. Mit LRP/RAP werden derzeit weitere Protokolle entwickelt (RAP steht dabei für das Ressource Allocation Protocol, siehe etwa IEEE P802.1CS, und LRP für das Link-local Registration Protocol, siehe IEEE P802.1Qdd).

Ein Sender wird im Rahmen von AVB bzw. TSN auch als Talker und ein Empfänger als Listener bezeichnet.

Ein TSN-Netzwerk kann mehrere TSN-Domains bzw. in mehrere TSN-Domains unterteilt sein, dies insbesondere, um eine im industriellen Bereich übliche bzw. erforderliche Architektur abzubilden. Jede der TSN-Domains ist dann für Etablierung von Pfaden/Streams inklusive der Allokierung der Ressourcen und der Ermittlung der Latenz, eine der Grundlagen von TSN, zuständig.

Die Anmelderin geht davon aus, dass insbesondere im industriellen Bereich ein Bedarf auch an TSN-Domain übergreifender Kommunikation auf Basis von Streams bestehen wird, was auch als Inter-TSN-Domain-Kommunikation bezeichnet werden kann.

Dabei stellt sich u.a. die Frage, wie der Weg von einem in einer TSN-Domain befindlichen Gerät zu einem anderen, in einer anderen TSN-Domain befindlichen Gerät gefunden werden kann, um zwischen ihnen eine Stream basierte Kommunikation zu etablieren.

Es ist daher eine Aufgabe der vorliegenden Erfindung, eine Möglichkeit zu schaffen, Pfade in einem Netzwerk für den Fall Domain-übergreifender Kommunikation zu finden und die Streams zu etablieren.

Diese Aufgabe wird gelöst durch ein Verfahren zur Datenkommunikation in einem insbesondere industriellen Netzwerk, das mehrere Domains umfasst, wobei zu jeder Domain einer oder mehrere Teilnehmer gehören und jeder Domain ein Domain-Kenner zugeordnet ist oder wird, der dem oder den Teilnehmern der jeweiligen Domain bekannt ist oder bekannt gegeben wird, und jeder Domain ein Domain-Manager zugeordnet ist oder wird, der für das Finden von Pfaden bzw. Pfadabschnitten in der jeweiligen Domain zuständig ist und dem ein Domain-Manager-Kenner zugeordnet ist oder wird, wobei dem oder den Teilnehmern jeder Domain der Domain-Manager-Kenner des zu ihrer Domain gehörigen Domain-Managers bekannt ist oder gegeben wird, und die Teilnehmer der Domains die Domain-Kenner und die Domain-Manager-Kenner ihrer Domain jeweils mit benachbarten Teilnehmern austauschen und diese ausgetauschten Teilnehmer-Nachbar-Informationen von den Teilnehmern gespeichert werden,
und die Domain-Manager die von den Teilnehmern ihrer Domain gespeicherten Teilnehmer-Nachbar-Informationen erfassen und so die Domain-Manager-Kenner der Domain-Manager benachbarter Domains erhalten, und die Domain-Manager unter Nutzung der erhaltenen Domain-Manager-Kenner mit benachbarten Domain-Managern kommunizieren und Manager-Nachbar-Informationen austauschen, wobei die Domain-Manager benachbarten Domain-Managern jeweils ihren eigenen Domain-Kenner und eine Information ob, und wenn ja, welche weiteren Domains der jeweilige Nachbar über den jeweiligen Domain-Manager erreichen kann, mitteilen,
und die Manager-Nachbar-Informationen genutzt werden, um wenigstens einen Pfad zwischen zwei in verschiedenen Domains befindlichen Teilnehmern zu finden.

Durch das erfindungsgemäße Verfahren werden die Probleme gelöst, wer im Falle einer Domain-übergreifenden, insbesondere TSN-Domain-übergreifenden Kommunikation für das Finden und die Etablierung von Pfaden und Streams zuständig ist, wie man die Ziel-TSN-Domain und einen Weg von einem Gerät in einer TSN-Domain zu einem Gerät in einer anderen TSN-Domain findet. Für die Pfad-Etablierung genügt es, den eindeutigen Domain-Kenner des Kommunikationspartners zu kennen. Für den Stream, der auf diesem Pfad etabliert werden soll, sind in der Regel in aus dem Stand der Technik vorbekannter Weise zusätzlich weitere Größen nötig, beispielsweise die Größe des Pakets, das Sendeintervall, die maximal erlaubte Latenz.

Der Austausch von für die Pfadfindung erforderlichen Informationen erfolgt dabei automatisch bzw. wird automatisch von Teilnehmern und Domain-Managern abgewickelt, ohne dass es eines Eingreifens bzw. einer Konfiguration durch einen Benutzer bedarf. TSN-Domains können dynamisch aneinander andocken bzw. abdocken, etwa können neue Domains hinzukommen, Domains wegfallen oder auch Domains ihren "Andockpunkt" wechseln, ohne dass ein Engineering Tool eine (neue) Gesamt-Topologie konfigurieren muss.

Die Manager-Nachbar-Informationen werden bevorzugt genutzt, um den wenigstens einen Pfad zwischen den zwei in verschiedenen Domains befindlichen Teilnehmern und einen Stream auf diesem zu etablieren. Die Pfad- und Stream-Etablierung gehört bzw. erfolgt insbesondere zusammen.

Erfindungsgemäß ist jeder Domain, insbesondere TSN-Domain ein Domain-Manager zugeordnet, der für die Pfadfindung und insbesondere die Pfad- sowie Stream-Etablierung in der jeweiligen Domain zuständig ist und diese abwickelt. Der jeweilige Domain-Manager ist dabei für diejenigen Teilnehmer zuständig, die zu seiner Domain gehören bzw. in seiner Domain liegen.

Unter einer TSN Domain ist bevorzugt eine administrativ gebildete Gruppe von Netzwerkknoten und Endgeräten (insbesondere Bridges, Bridged End-Stations und End-Stations) zu verstehen, deren Netzwerkeinstellungen gemeinsam verwaltet werden. Alle Elemente der Gruppe besitzen den gleichen Domain-Kenner, insbesondere die gleiche TSN-Domain-Identification. Bei einer TSN Domain handelt es sich insbesondere um eine TSN Domain im Sinne des Drafts IEC/IEEE 60802.

Ein Stream ist eine geschützte Verbindung, insbesondere eine solche, wie sie insbesondere von der Time-Sensitive Networking (TSN) Task Group in der internationalen Norm IEEE 802.1 festgelegt ist.

Die Pfad-/Stream-Etablierung erfolgt innerhalb einer Domain entweder zentral, über den Domain-Manager oder distributed (insbesondere unter Nutzung von LRP/RAP) oder bei einem eine Domain bildenden Router lokal im Gerät.

Eine Domain bzw. TSN-Domain kann eine Gruppe beispielsweise räumlich zusammengehörender, ggf. räumlich beieinander liegender Teilnehmer umfassen. Es ist jedoch auch möglich, dass eine (TSN-)Domain nur einen einzigen Teilnehmer umfasst. Eine (TSN-)Domain kann durch ein Segment bzw. einen Abschnitt bzw. Bereich eines Netzwerkes gegeben sein, beispielsweise durch ein Subnetz.

Mehrere (TSN-)Domains können in einem Netzwerk beispielsweise vorhanden sein, weil das Netzwerk in mehrere (TSN-)Domains unterteilt ist. Es können beispielsweise zwei, drei oder auch mehr (TSN-)Domains vorhanden sein.

Der Austausch von der Domain-Kenner und Domain-Manager-Kenner zwischen den benachbarten Teilnehmern erfolgt bevorzugt wiederholend bzw. zyklisch, beispielsweise alle 1 bis 10, etwa alle 5 Sekunden. Es kann alternativ oder zusätzlich auch ereignisgesteuert erfolgen, beispielsweise, wenn eine Veränderung erkannt wird. So wird der Informationsstand auch bei Änderungen aktuelle gehalten. Beispielsweise können Teilnehmer dann neu hinzukommende Nachbarn auch anderer Domains dann jeweils bei der nächsten Iteration automatisch erfassen bzw. erkennen, da sie von diesen die Teilnehmer. Nachbar-Informationen beim nächsten Durchgang erhalten.

Das Erfassen der von den Teilnehmern gespeicherten Teilnehmer-Nachbar-Informationen durch den Domain-Manager der jeweiligen Domain erfolgt bevorzugt, indem der jeweilige Domain-Manager diese Informationen aus den Teilnehmern seiner Domain ausliest. Dies kann zum Beispiel im Rahmen der Topologie-Erfassung erfolgen.

Auch das Erfassen, insbesondere Auslesen der von den Teilnehmern gespeicherten Teilnehmer-Nachbar-Informationen durch die Domain-Manager erfolgt vorteilhafter Weise wiederholend bzw. zyklisch, beispielsweise alle 1 bis 10, etwa alle 5 Sekunden. Es kann alternativ oder zusätzlich auch ereignisgesteuert erfolgen, beispielsweise, wenn eine Veränderung erkannt wird. Durch die wiederholte Erfassung sind die die Domain-Manager immer auf dem aktuellen Stand, erkennen etwa einen neu hinzugekommene Nachbar-Domain bei der nächsten Iteration.

Unter einem benachbarten Teilnehmer bzw. einer benachbarten Domain ist insbesondere ein direkt benachbarter Teilnehmer bzw. eine direkt benachbarte Domain zu verstehen.

Zwei Teilnehmer sind insbesondere benachbart, wenn diese über einen Port, etwa Ethernet- bzw. Bridge-Port, miteinander verbunden sind. Zwischen zwei benachbarten Teilnehmern liegt insbesondere kein weiterer Teilnehmer.

Zwei Domains sind in analoger Weise insbesondere benachbart, wenn zwischen diesen keine weitere Domain liegt. Domains sind vor allem dann benachbarte Domains, wenn ein Port eines Teilnehmers der einen Domain mit einem Port eines Teilnehmers der anderen Domain verbunden ist.

Da die am Rand zu einer benachbarten Domain liegenden bzw. die einen Rand zu einer benachbarten Domain bildenden Teilnehmer als direkten Nachbarn einen Teilnehmer aus einer anderen, benachbarten Domain haben, erhalten diese aufgrund des Austauschs der Teilnehmer-Nachbar-Informationen erfindungsgemäß Domain-Kenner und Domain-Manager-Kenner einer anderen, konkret der (jeweiligen) benachbarten Domain oder, wenn mehrere Nachbar-Domains vorhanden sind, Domains. Diese Information erhält wiederum der (jeweilige) Domain-Manager, der erfindungsgemäß die von den Teilnehmern seiner Domain empfangenen Teilnehmer-Nachbar-Informationen erfasst.

Teilnehmer, die als direkten Nachbarn einen Teilnehmer einer anderen Domain haben, können auch als Rand- bzw. Edge-Teilnehmer ihrer Domain aufgefasst und bezeichnet werden, bzw. ein Port eines solchen Gerätes, welcher mit einem Port eines Gerätes aus einer anderen Domain verbunden ist, kann jeweils als Rand- bzw. Edge-Port aufgefasst und bezeichnet werden.

Über das Auslesen der Teilnehmer-Nachbar-Informationen aus Rand- bzw. Edge-Teilnehmern der eigenen Domain erhält der (jeweilige) Domain-Manager Domain-Kenner und Domain-Manager-Kenner der benachbarten Domain bzw., sofern mehrere vorhanden sind, Domains.

Insbesondere unter Nutzung der Domain-Manager-Kenner des oder der jeweiligen Nachbarn kann dann eine Kommunikation mit den jeweiligen benachbarten Domain-Managern aufgebaut werden bzw. erfolgen. Unter benachbarten Domain-Managern sind insbesondere Domain-Manager benachbarter Domains zu verstehen. Die Kommunikation zwischen Domain-Managern, insbesondere benachbarten Domain-Managern kann beispielswiese über LRP über TCP erfolgen. LRP steht dabei für das Link-local Registration Protocol (siehe IEEE 802.1CS) und TCP für das Transmission Control Protocol (siehe beispielsweise https://de.wikipedia.org/wiki/Transmission_Control_Protocol/I nternet_Protocol sowie den Request for Comments der IETF RFC 1180) .

Die Teilnehmer-Nachbar-Informationen werden bevorzugt zwischen benachbarten Teilnehmern über ein Protokoll, insbesondere über LLDP ausgetauscht.

Das Link Layer Discovery Protocol (LLDP) ist ein Layer-2-Protokoll, welches in IEEE 802.1AB definiert bzw. normiert ist. LLDP bietet die Möglichkeit, in einem Netzwerk Informationen zwischen (direkt) benachbarten Teilnehmern, insbesondere Geräten auszutauschen.

Auf Teilnehmern, die LLDP unterstützen, ist in der Regel eine Softwarekomponente implementiert (LLDP-Agent), die in periodischen Abständen Informationen über sich selber an direkt benachbarte Teilnehmer, insbesondere Geräte, etwa Netzwercknoten wie Bridges und/oder Endgeräte, sendet und Informationen von direkten Nachbargeräten empfängt. Daten werden dabei als sogenannte LLDP Data Units (LLDP-DUs) empfangen und auf dem jeweiligen Gerät lokal in einer Datenstruktur, der sogenannten Management Information Base (MIB), gespeichert. Auf die abgelegten Informationen kann zugegriffen werden, beispielsweise über das Simple Management Network Protocol (SMNP). Die LLDP-DUs bestehen in der Regel aus Type-Length-Values (TLVs).

Die Domain-Kenner und/oder die Domain-Manager-Kenner werden in besonders vorteilhafter Ausgestaltung des erfindungsgemäßen Verfahrens als (zusätzliche) TLVs in Protokollnachrichten, insbesondere LLDP-Protokollnachrichten, etwas LLDP-DUs ausgetauscht.

Die ausgetauschten Teilnehmer-Nachbar-Informationen werden von den Teilnehmern bevorzugt in einer Management Information Base (MIB) bzw. einer Erweiterungs-MIB gespeichert. Entsprechend werden bevorzugt MIBs der Teilnehmer der eigenen Domain, in denen zusätzliche TLVs für die Domains bzw. Domain-Manager abgelegt sind, von den Domain-Managern ausgelesen, um an die Domain-Kenner und/oder Domain-Manager-Kenner zu kommen. Wie zusätzliche "Äste" in eine LLDP MIB "eingehängt" werden können, ist in der IEEE 802.1AB spezifiziert.

Den Teilnehmern kann ferner der Domain-Kenner ihrer eigenen Domain und/oder der Domain-Manager-Kenner des Domain-Managers ihrer eigenen Domain als Objekt in einer Management-Information-Datenbank bekannt sein oder bekannt gegeben werden. Eigene Domain-Kenner und/oder eigene Domain-Manager-Kenner können insbesondere als Objekte in einer MIB bzw. Erweiterungs-MIB vorliegen. Die Domain-Kenner werden bevorzugt initial in die Teilnehmer geschrieben und/oder unter Ausnutzung der im Domain-Manager vorhandenen Domain automatisch in die Teilnehmer geschrieben.

Bei den Domain-Kennern handelt es sich zweckmäßiger Weise um eindeutige Kenner. Es gilt insbesondere, dass sich die Domain-Kenner von verschiedenen Domains voneinander unterscheiden. Auch hinsichtlich der Domain-Manager-Kenner gilt bevorzugt, dass sich die Domain-Manager-Kenner von Domain-Managern verschiedener Domains unterscheiden.

Die Teilnehmer können prinzipiell in Software oder Hardware oder einer Kombination aus Software und Hardware implementiert sein. Bei den Teilnehmern handelt es sich insbesondere um Geräte (bevorzugt mit Software). Ein Teilnehmer kann beispielsweise durch ein Endgerät oder Netzwerkknoten, wie etwa eine Bridge oder einen Switch, gegeben sein.

Die Domain-Manager können in analoger Weise in Software oder Hardware oder einer Kombination aus Software und Hardware implementiert sein. Bei einem Domain-Manager kann es sich beispielsweise um ein eigenständiges Gerät bzw. Modul handeln. Ein Domain-Manager kann aber auch in ein Endgerät, beispielsweise eine PLC, oder einen Netzwerknoten, etwa eine Bridge, einer Domain integriert sein.

Es ist bekannt, dass das Finden und/oder Etablieren von Pfaden und Streams in einem Netzwerk beispielsweise von zentraler Stelle aus erfolgt bzw. von einer zentralen Entität abgewickelt wird. Bekannt sind beispielsweise sogenannte zentralisierte Netzwerkcontroller (englisch: Centralized Network Controller, CNC), welche die Einrichtung von Pfaden übernehmen können. Auch bekannt ist eine sogenannte Netzwerk-Management-Engine (englisch: Network Management Engine, NME), konkret aus der Profinet Protokollspezifikation der PNO. Bei einem NME handelt es sich bevorzugt um eine Entität, welche die Funktion eines CNC mit der Topologie-Erfassung kombiniert bzw. integriert.

Die Domain-Manager, von denen erfindungsgemäß jeder Domain einer zugeordnet ist, können beispielsweise durch CNCs oder NMEs gegeben sein oder auch als Bestandteile bzw. (ggf. rein funktionale) Module eines CNC bzw. einer NME implementiert sein. Ein Domain-Manager kann für die Pfad- und Stream-Etablierung zum Beispiel jedem Teilnehmer/Gerät mit mehr als einem Port mitteilen, über welchen Port die Weiterleitung von Daten, insbesondere Streamdaten zu erfolgen hat.

Bei den Domain-Managern kann es sich jeweils um zentrale Entitäten handeln. Es ist jedoch auch möglich, dass einer oder mehrere, ggf. alle Domain-Manager als verteilte bzw. distributierte Domain-Manager implementiert sind. Dann kann die zugehörige TSN-Domain verteilt bzw. "distributed" verwaltet werden.

Es kann insbesondere vorgesehen sein, dass wenigstens einer der Domain-Manager zwei oder mehr Domain-Manager-Agenten umfasst oder durch zwei oder mehr Domain-Manager-Agenten gebildet wird, die bevorzugt auf verschiedenen Teilnehmern seiner Domain implementiert sind. Besonders bevorzugt ist zumindest auf jedem Rand-Teilnehmer der (jeweiligen) Domain, insbesondere jedem Teilnehmer, der einen Port hat, der mit dem Port eines Teilnehmers einer anderen Domain verbunden ist, wenigsten ein Domain-Manager-Agent implementiert. Die Domain-Manager-Agenten können sozusagen stellvertretend für einen zentralen, dedizierten Manager die Kommunikation zu den Domain-Managern (ggf. zu den Domain-Manager-Agenten dieser) der benachbarten Domain(s) übernehmen. Die Domain-Manager-Agenten einer Domain bzw. eines Domain-Managers können miteinander kommunizieren, um benötigte Informationen für die inter-Domain-Kommunikation zu erhalten.

Wie die Pfad- und Stream-Etablierung im zentralisierten Modell erfolgen kann, ist beispielsweise in IEEE 802.Qcc "Centralized model" beschrieben. Es kann vorgesehen sein, dass einer oder mehrere der Domain-Manager die Pfad- und Stream-Etablierung abwickeln, wie in IEEE 802.Qcc unter "Centralized model" beschrieben.

Wie die Pfad- und Stream-Etablierung in einem verteilten Modell erfolgen kann, ist beispielsweise IEEE 802.1Qcc "Distributed model" beschrieben. Es kann vorgesehen sein, dass einer oder mehrere der Domain-Manager die Pfad- und Stream-Etablierung abwickeln, wie in IEEE 802.Qcc "Distributed model" beschrieben, wobei dies zweckmäßiger Weise für Domain-Manager gilt, die zwei oder mehr verteilte Domain-Manager-Agenten umfassen, die verteilt auf verschiedenen Teilnehmern, insbesondere Rand-Teilnehmern implementiert sind.

Die Stream-Etablierung schließt bevorzugt in an sich bekannter Weise ein, dass für den Stream Forwarding-Regeln in Forwarding/Routing Tabellen beteiligter Teilnehmer, insbesondere beteiligter Netzwerkknoten, wie Bridges, eingetragen werden.

In besonders zweckmäßiger Ausgestaltung des erfindungsgemäßen Verfahrens gibt ein Domain-Manager, der von einem benachbarten Domain-Manager neben dessen Domain-Kennung die Manager-Nachbar-Information erhält, welche Domains über den direkt benachbarten Domain-Manager noch erreichbar sind, diese Information an einen oder mehrere andere benachbarte Domain-Manager, sofern vorhanden, weiter.

Durch dieses "Durchreichen" der Information, wer über wen erreicht werden kann, wird sichergestellt, dass eine Pfad-/Stream-Anfrage über mehrere Domains auf geeignetem bzw. dem richtigen Weg bis zur Ziel-Domain "weitergereicht" werden kann. Dann weiß insbesondere jeder Domain-Manager, an welchen direkten Nachbar-Domain-Manager er eine Pfadanfrage weiterleiten muss, um das Ziel erreichen zu können.

Dieses "Durchreichen" der Information, wer noch erreicht werden kann erfolgt bevorzugt bei jedem bzw. durch jeden Domain-Manager, der nicht Manager einer "Rand-Domain", etwa einer letzten Domain einer Kette von Domains ist, die nur an eine andere Domain gekoppelt ist. Die Weitergabe an andere Nachbar-Manager kann nur erfolgen, wenn es neben der Nachbar-Domain, aus der die Information erhalten wurde, noch wenigstens eine weitere Nachbar-Domain mit zugehörigem Domain-Manager gibt, was der Fall sein kann jedoch nicht sein muss, da eine Domain beispielsweise die letzte, nur mit genau einer anderen Domain verbundene Domain einer Kette von Domains sein kann.

Weiterhin bevorzugt ist vorgesehen, dass über eine Schnittstelle des jeweiligen Domain-Managers die Teilnehmer der jeweils zugehörigen Domain beispielsweis über einen Service QueryPath die Etablierung eines Pfades/Streams anfordern können.

In weiterer vorteilhafter Ausgestaltung ist ferner vorgesehen, dass jeder Domain-Manager, der insbesondere über eine Schnittstelle von einem Teilnehmer seiner Domain oder einem Domain-Manager einer benachbarten Domain eine Anfrage für die Etablierung eines Pfades und insbesondere Streams zu einem Teilnehmer in einer anderen Domain erhält, einen Pfadabschnitt in seiner Domain findet und insbesondere etabliert und die Pfadanfrage zusätzlich an denjenigen benachbarten Domain-Manager weiterleitet, der der anderen Domain zugeordnet ist bzw. über den die andere Domain gemäß der ausgetauschten Manager-Nachbar-Informationen erreichbar ist.

Erhält ein Domain-Manager hingegen von einem Teilnehmer seiner Domain oder einem anderen Domain-Manager eine Anfrage für die Etablierung eines Pfades und insbesondere Streams zu einem Teilnehmer seiner Domain, findet er zweckmäßiger Weise in seiner Domain einen Pfad zu diesem und etabliert den Pfad und insbesondere Stream bevorzugt. In diesem Fall ist eine Weiterleitung der Anfrage nicht erforderlich. Der Domain-Manager ist der Manager der Ziel-Domain. Dies kann sowohl der Fall sein, wenn eine nur Domain-interne Pfadanfrage gestellt wurde, die der betroffene Domain-Manager dann alleine abwickeln kann, oder auch, wenn bei einer Domain-übergreifenden Anfrage der betroffene Domain-Manager der Manager der letzten, also der Ziel-Domain ist.

Für den Fall, dass wenigstens eine Domain-Manager mehrere verteilte Domain-Manager-Agenten umfasst bzw. durch diese gebildet wird, kann eine Anfrage an den Domain-Manager dadurch erfolgen, dass eine Anfrage an einen seiner Domain-Manager-Agenten erfolgt.

Weiterhin vorteilhaft gilt, dass eine Anfrage für die Etablierung eines Pfades und insbesondere Streams von einem Teilnehmer in einer Domain zu einem Teilnehmer in der gleichen Domain die Angabe der beiden Teilnehmer und insbesondere nicht die Angabe der Domain bzw. des Domain-Kenners umfasst.

Werden beispielsweise bei QueryPath nur beteiligte Endgeräte angegeben, wird bevorzugt ein Pfad innerhalb der Domain angefordert, der vom lokalen Domain-Manager etabliert wird. QueryPath ist in dem Draft der IEC61158-6-10 definiert und in der Profinet Spezifikation V2.4 der PROFIBUS und PROFINET International.

Alternativ oder zusätzlich kann vorgesehen sein, dass eine Anfrage für die Etablierung eines Pfades und insbesondere Streams von einem Teilnehmer in einer Domain zu einem Teilnehmer in einer anderen Domain zusätzlich zu der Angabe der beiden Teilnehmer die Angabe deren Domains, insbesondere der Domain-Kenner deren Domains enthält. Die Teilnehmer können dabei beispielsweise durch Namen angegeben werden, z.B. den Hostnamen, wie in DNS (Domain Name System) definiert.

Werden beispielsweise bei QueryPath beteiligte Endstations inklusive bzw. plus der Domain angegeben, so wir ein Pfad über alle beteiligten Domains und Domain-Manager etabliert. Dazu wird die Pfadanforderung zweckmäßiger Weise vom jeweiligen Domain-Manager zum nächsten weitergegeben, der den Pfad in seiner Domain etabliert und die Anfrage bei Bedarf zum nächsten Domain-Manager weiterleitet.

In weiterer vorteilhafter Ausgestaltung ist vorgesehen, dass im Rahmen der Etablierung eines Pfades/Streams zwischen einem Teilnehmer in einer Domain und einem Teilnehmer in einer anderen Domain Domain-Ränder bildende Ports von Teilnehmern, also Teilnehmer-Ports, konfiguriert werden, insbesondere, indem ein VLAN-Austausch oder ein Austausch einer DMAC und eines VLANs eingestellt wird. Es sei angemerkt, dass in IEEE802.1CB die "Stream Identification" beschrieben wird. Dort wird als "Active Stream Identification" der Austausch der für Stream Identifcation erforderliche Felder erklärt. In einer TSN Domain wird ein Stream Identification Konzept etabliert. Unterscheiden sich diese zwischen den TSN-Domains, sollte beim Übergang "übersetzt" werden. Die Übersetzung kann durch die "Active Stream Identification" erfolgen, wobei z.B. die Felder DMAC (DestinationMAC Adresse) und TCI.VID (Vlan Adresse) überschrieben werden. Der Domain-Manager aktiviert im Rahmen der Pfad/Stream Etablierung zweckmäßiger Weise dieses Verfahren an den Rand-/Boundary-Ports.

Es ist auch möglich, dass einer oder mehrere Router in dem Netzwerk vorgesehen sind. Dann kann wenigstens ein Router eine Domain, insbesondere TSN-Domain bilden bzw. sich bezüglich. der Pfad-/Stream Etablierung über TSN-Domain Grenzen hinweg wie eine solche verhalten.

Es kann insbesondere wenigstens ein Router in dem Netzwerk vorgesehen sein, der eine Router-Domain bildet und dem ein Domain-Kenner zugeordnet ist und der einen Domain-Manager implementiert oder dem eine solcher zugeordnet ist, und der sich, was den Austausch von Teilnehmer- und Manager-Nachbar-Informationen angeht, wie eine nicht durch einen Router gebildete Domain verhält, mit der Maßgabe, dass er zusätzlich zu erkennen gibt, dass er ein Router ist. Er kann beispielsweise seinen Domain-Kenner und/oder seinen Domain-Manager-Kenner zusammen mit der Info "ich bin ein Router" an benachbarte Domain-Manager übermitteln, bevorzugt via LRP over TCP.

In zweckmäßiger Ausgestaltung ist vorgesehen, dass der Domain-Manager einer Router-Domain, der von einem Domain-Manager einer benachbarten Domain eine Anfrage für die Etablierung eines Pfades zu einem Teilnehmer in einer anderen Domain erhält, die Pfadanfrage an denjenigen benachbarten Domain-Manager weiterleitet, der der anderen Domain zugeordnet ist bzw. über den die andere Domain gemäß der ausgetauschten Manager-Nachbar-Informationen erreichbar ist.

Dass ein Router eine (TSN-)Domain bildet bzw. sich nach außen als solche "ausgibt" bzw. verhält ermöglicht es insbesondere, dass beispielsweise IP/UDP Pakete über TSN-Streams zwischen unterschiedlichen IP Subnetzen übertragen werden können.

Es kann auch sein, dass die Domain-Manager von nicht durch Router gebildeten Domains zu erkennen geben, dass ihre Domains keine Router-Domains sind. Sie teilen insbesondere benachbarten Domain-Managern neben ihren Domain-Kennern und/oder Domain-Manager-Kennern mit, dass ihre Domains keine Router-Domains sind.

Ein weiterer Gegenstand der Erfindung ist ein bevorzugt industrielles Netzwerk, insbesondere für eine Automatisierungsanlage und/oder Fertigungsanlage, das zur Durchführung des erfindungsgemäßen Verfahrens ausgebildet und eingerichtet ist.

Das erfindungsgemäße Netzwerk ist zweckmäßiger Weise Ethernet-fähig, es handelt sich insbesondere um ein Ethernet-basiertes Netzwerk. Es kann auch ein WiFi oder 5G-Netzwerk sein bzw. entsprechende Segmente umfassen. Insbesondere, damit geschützte Verbindungen, etwa Streams mit garantierter Dienstgüte (englisch: Quality of Service, QoS) unterstützt werden, ist das Netzwerk bzw. sind insbesondere zumindest die beteiligten Netzwerkknoten TSN-fähig, unterstützt bzw. unterstützen insbesondere die Einrichtung geschützter Verbindungen mit reservierten Netzwerkressourcen an den beteiligten Netzwercknoten.

Ein weiterer Gegenstand der vorliegenden Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung eines industriellen Netzwerkes, das in sechs TSN-Domains unterteilt ist;
- FIG 2: zwei der TSN-Domains des Netzwerkes aus FIG 1;
- FIG 3: die Domains aus FIG 2 mit hergestellter Verbindung zwischen den Domain-Managern;
- FIG 4: das Netzwerk aus FIG 1 mit einem etablierten Pfad zwischen zwei Teilnehmern aus verschiedenen Domains;
- FIG 5: der Austausch von Manager-Nachbar-Informationen in dem Netzwerk aus FIG 1;
- FIG 6: eine Router-Domain und zwei Rand-Bridges benachbarter Domains;
- FIG 7: ein weiteres industrielles Netzwerk, dessen Struktur derjenigen des Netzwerkes aus FIG 1 entspricht, wobei eine der Domains durch die Router-Domain aus FIG 6 gegeben ist;
- FIG 8: eine Domain mit einem verteilten, durch mehrere Domain-Manager-Agenten gebildeten Domain-Manager; und
- FIG 9: das Netzwerk aus FIG 1, wobei eine der Domains an einer Stelle abgekoppelt und anderer Stelle wieder angekoppelt wird bzw. wurde.

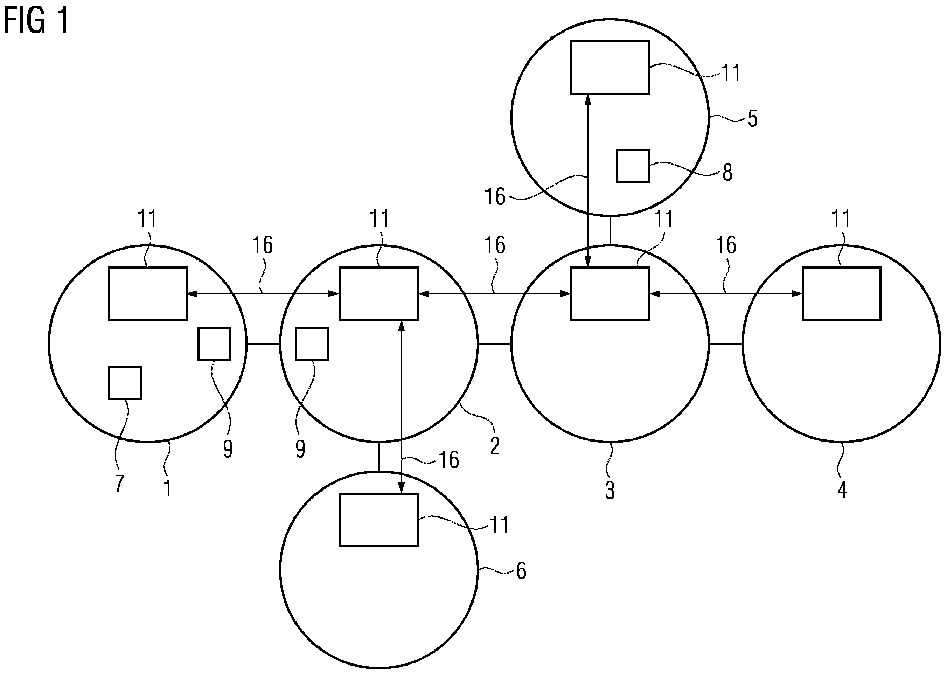

Die FIG 1 zeigt eine stark vereinfachte, rein schematische Darstellung eines industriellen TSN-Netzwerkes, das in mehrere, vorliegend sechs TSN-Domains 1-6 unterteilt ist.

Zu jeder der Domains gehören mehrere Teilnehmer, die vorliegend durch Endgeräte 7, 8 sowie Netzwerkknoten, konkret Bridges 9 gegeben sind. In der FIG 1 sind rein beispielhaft nur zwei Endgeräte 7, 8 und zwei Bridges 9 gezeigt, die in den Domains 1, 2 und 5 liegen. Neben diesen Teilnehmern sind weitere Teilnehmer, konkret Endgeräte 7, 8 und Bridges 9 vorgesehen, die ebenfalls an dem Netzwerk teilnehmen. Dabei sind sowohl in den Domains 1, 2 und 5 als auch den weiteren Domains 3, 4, 6 noch weitere Endgeräte 7, 8 und Bridges 9 vorhanden. Jeder Teilnehmer, vorliegend jedes Endgerät 7, 8 und jede Bridge 9, gehört zu genau einer der Domains 1-6.

Die Bridges 9 sind TSN-fähig, so dass geschützte Verbindungen in Form von TSN-Streams in dem Netzwerk eingerichtet werden und Streamdatenpakete geschützt, insbesondere unter Nutzung von an beteiligten Bridges 9 reservierten Netzwerkressourcen übertagen werden können. Zu TSN sei auch auf die diversen vorbekannten Standards verwiesen, beispielsweise IEEE 802.1Q, IEEE 802.1AB, IEEE 802.1 AS-REV und IEEE 802.1 Qcc.

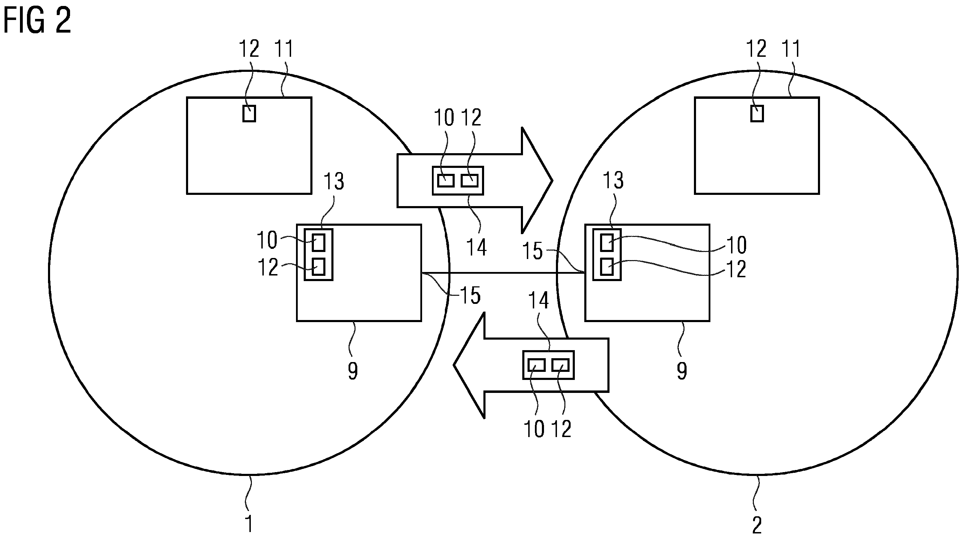

Jeder Domain 1-6 ist ein eindeutiger Domain-Kenner 10 zugeordnet (siehe FIG 2). Die Domain-Kenner 10 verschiedener Domains 1-6 unterscheiden sich voneinander.

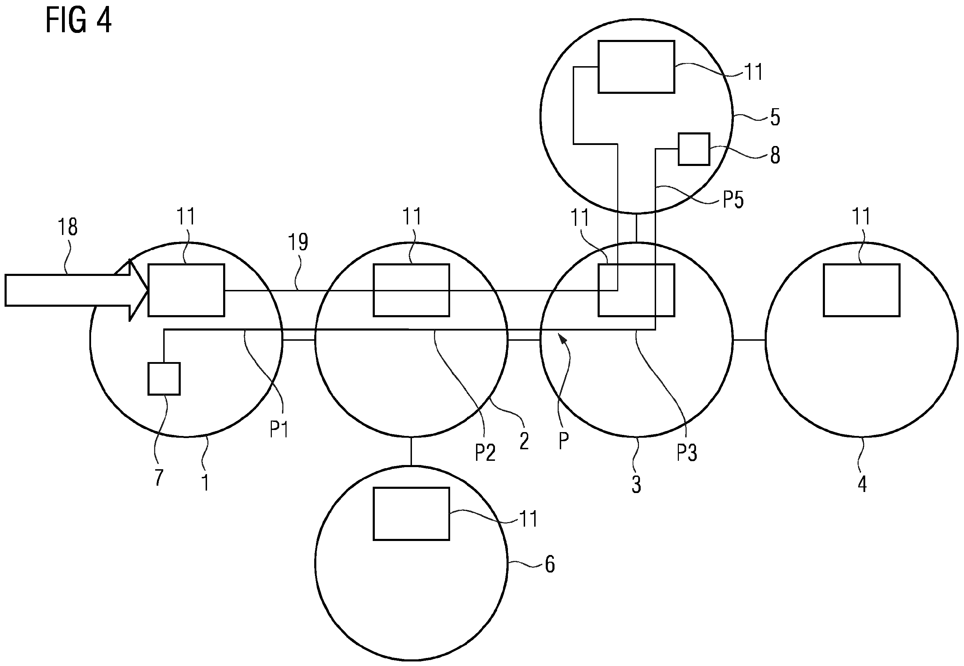

Es ist ferner jeder der Domains 1-6 jeweils ein Domain-Manager 11 zugeordnet, der für das Finden von Pfaden P bzw. Pfadabschnitten P1-P3, P5 (siehe FIG 4) in der jeweiligen Domain 1-6 zuständig ist und dem ein Domain-Manager-Kenner 12 zugeordnet ist oder wird. Die Zuordnung von Domain-Manager 11 erfolgt bevorzugt im Rahmen der TSN-Domain-Bildung als administrativer Prozess. Dabei werden der jeweiligen Domain 1-6 und dem jeweiligen Domain-Manager 11 bevorzugt auch ihre Kenner bzw. Namen zugeordnet. Es sei angemerkt, dass die Domain-Manager 11 auch jeweils als Bestandteil bzw. als (ggf. funktionales) Modul einer NME (Network Management Engine) oder eines CNC (Central Network Controller) der jeweiligen Domain 1-6 gegeben sein können, die neben den Aufgaben des Domain-Managers 11 andere Aufgaben übernehmen.

Allen Teilnehmern 7-9 jeder Domain 1-6 ist der Domain-Manager-Kenner 12 des zu ihrer Domain 1-6 gehörigen Domain-Managers 11 und der Domain-Kenner 11 ihrer Domain 1-6 bekannt bzw. wird bekannt gegeben.

Vorliegen hat jeder Teilnehmer 7-9 über ein Objekt in einer Management Information Base MIB 13 bzw. Erweiterungs-MIB den Domain-Kenner 10 seiner Domain 1-6 erhalten, der bei dem dargestellten Ausführungsbeispiel durch eine TSN Domain Identifikation gegeben ist.

Ferner hat jeder Teilnehmer 7-9 über ein Objekt in seiner Management Information Base MIB 13 den Domain-Manager-Kenner 12 des Domain-Managers 11 seiner Domain 1-6 erhalten.

Diese Objekte, also die Domain-Kenner 10 und Domain-Manager-Kenner 12, werden in Form von zusätzlichen TLVs in LLDP-Nachrichten, konkret LLDP-DUs 14 (LLDP Data Units) zwischen allen direkt benachbarten Teilnehmern 7-8 ausgetauscht. Dies ist - wiederum rein schematisch - in der FIG 2 dargestellt, welche die Domains 1 und 2 sowie jeweils einen Teilenehmer 9 dieser, konkret eine Bridge 9 jeder der beiden Domains 1, 2 in vergrößerter Darstellung zeigt. Die beiden gezeigten Bridges sind Rand- bzw. Edge-Bridges 9 ihrer jeweiligen Domain 1, 2, da sie jeweils einen Port 15 haben, der mit einem Port 15 eines Teilnehmers, konkret der Bridge 9 aus einer anderen Domain 1, 2 verbunden ist. Die Ports 15 sind mit anderen Worten beide letzte bzw. am Rand liegende Ports 15 in ihrer Domain 1, 2. Man kann diese Ports 15 auch als Rand- oder Edge-Ports bezeichnen.

Da alle direkte Nachbarn ihre Domain-Kenner 10 und Domain-Manager-Kenner 11 austauschen, erhält die eine Rand-Bridge 9 einer Domain 1, 2von der anderen Rand-Bridge 9 einer anderen Domain 1, 2 jeweils den Domain-Kenner und Domain-Manager-Kenner der benachbarten Domain 1, 2.

Die Teilnehmer 7-9 speichern diese via LLDP-DUs 14 von Nachbarn erhaltenen Daten bzw. Informationen, Teilnehmer-Nachbar-Informationen, als Objekte in ihrem MIBs 13 bzw. Erweiterungs-MIBs.

Es sei angemerkt, dass das LLDP TLV Prinzip im Allgemeinen auch in IEEE 802.1AB beschrieben ist.

Die Domain-Manager 11 lesen jeweils die von sämtlichen Teilnehmern ihrer Domain 1-6 gespeicherten Teilnehmer-Nachbar-Informationen aus. Dabei erhalten sie über ihre Rand-Teilnehmer die Domain-Kenner und Domain-Manager-Kenner 12 ihrer Nachbar-Domains 1-6. Für FIG 2 beispielsweise gilt, dass der Domain-Manager 11 der Domain 1 durch Auslesen der entsprechenden MIB-Objekte 10, 12 der gezeigten Rand-Bridge 9 seiner Domain den Domain-Kenner 10 der Domain 2 erhält sowie den Domain-Manager-Kenner 12 des Domain-Managers 11 von Domain 2. Der Domain-Manager 11 von Domain 2 erhält auf die gleiche Weise von seiner dargestellten Rand-Bridge 9 Domain-Kenner 10 und Domain-Manager-Kenner 12 von der Domain 1. Somit wissen die Domain-Manager 11, welche Domains 1-6 Nachbar-Domains 1-6 sind und ihnen liegt der Domain-Manager-Kenner 12 der Domain-Manager 11 dieser vor.

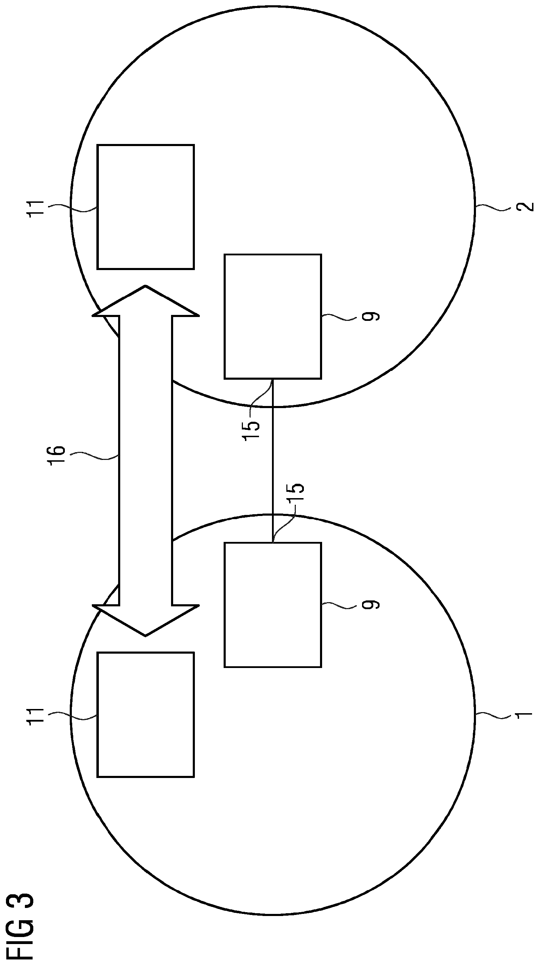

Benachbarte Domain-Manager 11 kommunizieren dann unter Nutzung der erhaltenen Domain-Manager-Kenner 12 aus den jeweiligen Nachbar-Domains 1-6. Dazu wird zwischen benachbarten Domain-Managern 11, also Domain-Manager 11 in benachbarten Domains 1-6 jeweils eine Verbindung 16 hergestellt, was rein schematisch in FIG 3 dargestellt ist, dort beispielhaft für eine Verbindung 16 zwischen den Domain-Managern 11 der Domains 1 und 2. Eine solche Verbindung bzw. Nachbar-Verbindung 16 wird auch zwischen den weiteren benachbarten Domain-Managern 11 hergestellt, konkret zwischen denen von Domain 2 und 6, 2 und 3, 3 und 5 sowie 3 und 4, wie in FIG 1 durch entsprechende Pfeile angedeutet.

Über die jeweils zwischen benachbarten Domain-Managern 11 hergestellten Verbindungen 16 werden dann Manager-Nachbar-Informationen ausgetauscht. Jeder Domain-Manager 11 teilt jedem benachbarten Domain-Manager 11 jeweils seinen eigenen Domain-Kenner 10 und eine Information ob, und wenn ja, welche weiteren Domains 1-6 der jeweilige Nachbar-Domain-Manager 11 über den jeweiligen Domain-Manager 11 erreichen kann, mit.

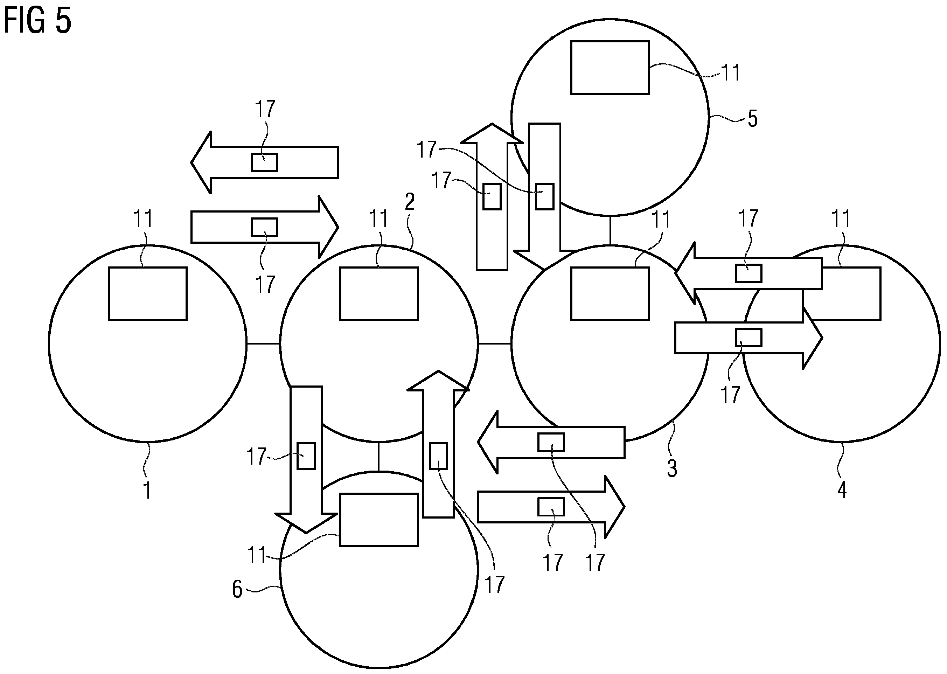

Dieser Austausch zwischen benachbarten Domain-Managern 11 ist in FIG 5 schematisch dargestellt. In dieser ist die jeweils an den Nachbarn 11 übermittelte Information, welche den eigenen Domain-Kenner 10 und die Angabe, welche Nachbarn gegebenenfalls noch zu erreichen sind umfasst, mit dem Bezugszeichen 17 versehen. Ein Domain-Manager 11 teilt seinen Nachbarn mit, welche TSN-Domains 1-6 sie über seine TSN-Domain 1-6 erreichen können. Mit dieser Information wird eine lokale Routing Datenbank aufgebaut, aus der bei QueryPath die Information für den zu fragenden Domain-Manager 11 kommt. D.h. ein Domain-Manager 11 teil seinem direkten Nachbarn alle TSN-Domains 1-6 mit, die über ihn erreicht werden können. Bevorzugt "spiegelt" er dabei keine TSN-Domains an den Nachbarn zurück. D.h. er liefert dem jeweiligen Nachbarn alle TSN-Domins 1-6 die er kennt, löscht aber vor der Übertragung alle Einträge, die er von diesem Nachbarn erhalten hat.

Bei dem dargestellten Ausführungsbeispiel erfolgt die Kommunikation zwischen den jeweils benachbarten Domain-Managern 11 via LRP over TCP.

Konkret teilt der Domain-Manager 11 aus der Domain 2 demjenigen der Domain 1 neben seinem Domain-Kenner mit, dass der Domain-Manager aus Domain 1 nicht nur ihn sondern über ihn noch sämtliche weiteren Domains, also auch die Domains 3-6 erreichen kann. Der Domain-Manager 11 aus der Domain 1 teilt dem Domain-Manager 11 aus der Domain 2 neben dem Domain-Kenner 10 seiner Domain 1 mit, dass nur er erreichbar ist (über ihn jedoch keine weitere Domain).

Der Domain-Manager 11 aus Domain 2 teilt ferner demjenigen aus Domain 6 neben seinem Domain-Kenner 10 mit, dass über ihn noch sämtliche weitere Domains also auch noch die Domains 1, 3-6 zu erreichen sind.

Dem Domain-Manager 11 von Domain 3 teilt derjenige von Domain 2 neben seinem Domain-Kenner 10 mit, dass er über ihn noch die weiteren Domains 1 und 6 erreichen kann.

Der Domain-Manager 11 von Domain 3 teilt demjenigen aus Domain 2 neben dem Domain-Kenner 10 seiner Domain 3 mit, dass er auch noch die Domains 4 und 5 über ihn erreichen kann. Dem Domain-Manager 11 aus Domain 4 teilt derjenige aus Domain 3 mit, dass er über ihn noch alle weiteren Domains, also 1, 2, 5 und 6 erreich kann, und demjenigen aus Domain 5 teilt er mit, dass er über ihn noch alle weiteren Domains, also 1, 2, 4, und 6 erreichen kann.

Die Domain-Manager 11 aus den Domain 4 und 5 teilen jeweils dem Domain-Manager 11 aus Domain 3 mit, dass er jeweils nur sie direkt, jedoch keine weiteren Domains über sie erreichen kann. Dies teilt auch der Domain-Manager 11 aus Domain 6 demjenigen aus Domain 2 mit.

Die Domain-Manager 11 wissen jeweils, welche Domains der jeweilige Nachbar noch über sie erreichen kann, weil jeder Domain-Manager 11, der von einem benachbarten Domain-Manager 11 neben dessen Domain-Kennung die Manager-Nachbar-Information erhält, welche Domains über den direkt benachbarten Domain-Manager 11 noch erreichbar sind, diese Information an einen oder mehrere andere benachbarte Domain-Manager, sofern vorhanden, weitergibt.

Dieses (implizite) "Durchreichen" der Information, wer noch erreicht werden kann, erfolgt für jeden bzw. bei jedem Domain-Manager 11. Dabei "spricht" jeder nur mit Nachbarn.

Da die Information, wer erreichbar ist, von Domain-Manager 11 zu Domain-Manager 11 weitergereicht wird, wissen diese jeweils, welche Domains - aus Sicht des jeweiligen Nachbarn - noch "hinter ihnen liegen", obwohl jeweils nur direkte Nachbar-Manager miteinander "sprechen".

Die ausgetauschten Manager-Nachbar-Informationen werden dann genutzt, um wenigstens einen Pfad P zwischen zwei in verschiedenen Domains 1-6 befindlichen Teilnehmern 7, 8 zu finden und zu etablieren, was beispielhaft und rein schematisch in FIG 4 gezeigt ist.

Konkret möchte der Teilnehmer 7, bei dem es sich vorliegend um ein Endgerät aus der Domain 1 handelt, an den ebenfalls durch ein Endgerät gegebenen Teilnehmer 8 in der Domain 5 Daten über einen bzw. als TSN-Stream senden.

Der Teilnehmer 7 aus Domain 1 stellt dazu eine Anfrage 18 für einen Pfad/Pfadabschnitt und Stream an den Domain-Manager 11 aus seiner Domain 1. Der Domain-Manager 11 hat hierfür eine Schnittstelle, über die die Teilnehmer seiner Domain 1 beispielsweis über einen Service QueryPath die Etablierung eines Pfades/Pfadabschnitts und Streams anfordern können. Die Domain-Manager 11 der weiteren Domains 2-6 haben ebenfalls jeweils eine solche Schnittstelle.

Ein Domain-Manager 11, der über eine Schnittstelle von einem Teilnehmer 7, 8 seiner Domain 1-6 oder auch von einem anderen Domain-Manager 11 einer benachbarten Domain 1-6 eine Anfrage für die Etablierung eines Pfades P/Pfadabschnitts P1-P3, P5 und Streams zu einem Teilnehmer in einer anderen Domain 1-6 erhält, findet einen Pfadabschnitt P1-P3, P5 in seiner Domain 1-6 und etabliert diesen bzw. den Stream auf diesem. Er leitet die Anfrage 18 zusätzlich an denjenigen benachbarten Domain-Manager 11 weiter, der der anderen Domain 1-6 zugeordnet ist bzw. über den die andere Domain 1-6 gemäß der ausgetauschten Manager-Nachbar-Informationen 17 erreichbar ist. Dies ist in FIG 4 dargestellt, wobei die Anfrage 18 von Teilnehmer 7 aus Domain 1 an seinen Domain-Manager 11 durch einen Pfeil angedeutet ist.

Wenn ein Teilnehmer 7, 8 der TSN-Domain 1-6 vom Domain-Manager 11 seiner Domain 1-6 die Etablierung eines Pfades P/Pfadabschnittes P1-P3, P5 und Streams auf diesem zwischen ihm und einem weiteren Teilnehmer 7, 8 in einer anderen Domain 1-6 fordert, prüft der Domain-Manager 11 über seine über die Domain-Manager 11 zu Domain-Manager 11 Kommunikation aufgebauten Routen Tabellen, ob er einen Weg zu der anderen TSN-Domain 1-6 kennt. Der Weg geht über den Domain-Manager 11 der anderen TSN-Domain 1-6. Deshalb spricht eine für die Domain-Manger 11 zu Domain-Manager 11 Kommunikation definierte Schnittstelle den Domain-Manager 11 der anderen TSN-Domain 1-6 zur Pfad-/Stream-Etablierung an.

Ein Domain-Manager 11, der von einem Teilnehmer 7, 8 seiner Domain 1-6 oder einem anderen Domain-Manager 11 eine Anfrage 18 für die Etablierung eines Pfades P bzw. Pfadabschnittes P1-P3, P5 zu einem Teilnehmer 7, 8 seiner Domain 1-6 und Stream auf diesem erhält, findet und etabliert in seiner Domain 1-6 den erforderlichen Pfad P bzw. Pfadabschnitt P1-P3, P5 bzw. Stream auf diesem. In diesem Fall ist keine Weiterleitung der Pfadanfrage erforderlich und erfolgt dementsprechend nicht.

Eine Anfrage 18 für die Etablierung eines Pfades/Streams von einem Teilnehmer 7, 8 in einer TSN-Domain 1-6 zu einem Teilnehmer 7, 8 in der gleichen TSN-Domain 1-6 umfasst dabei die Angabe der beiden Teilnehmer jedoch nicht der Quell- und Ziel-Domain. Bei QueryPath beispielsweise werden in diesem Falle nur die beteiligten Endgeräte 7, 8 angegeben und eine Pfad P bzw. Pfadabschnitt P1-P3, P5 innerhalb der Domain 1-6 angefordert, der von dem lokalen Domain-Manager 11 der Domain 1-6 etabliert wird.

Eine Anfrage für die Etablierung eines Pfades P von einem Teilnehmer 7, 8 in einer TSN-Domain 1-6 zu einem Teilnehmer 7, 8 in einer anderen TSN-Domain 16 hingegen umfasst zusätzlich zu der Angabe der beiden Teilnehmer die Angabe deren Domains 1-6, also der Quell- und Zieldomain. Bei QueryPath werden dann beispielsweise die beteiligte Endstations 7, 8 inklusive bzw. plus der TSN-Domain angegeben und ein Pfad P wird über alle beteiligten TSN-Domains 1-6 und Domain-Manager 11 etabliert.

Für den Domain-übergreifenden Pfad P von dem Teilnehmer 7 in Domain 1 zu Teilnehmer 8 in Domain 5 werden bei QueryPath die beiden Teilnehmer 7, 8 und deren Domains angegeben. Die Pfadanfrage 18 umfasst beispielsweise die Angaben TSN Domain 1.7 und TSN Domain 5.8.

Für den Domain-übergreifenden Pfad P findet und etabliert der Domain-Manager 11 aus Domain 1 einen Pfadabschnitt P1 in seiner Domain 1 und leitet die Anfrage 18 zusätzliche an den benachbarten Domain-Manager 11 aus Domain 2 weiter, der dies ebenfalls tut, wobei er den Pfadabschnitt P2 in seiner Domain findet und etabliert und die Anfrage 18 an den Manager 11 von Domain 3 weiterleitet. Der Manager 11 dieser Domain 3 etabliert den Pfadabschnitt 3 und leitet die Anfrage an den Manager von Domain 5 weiter, welcher den letzten Pfadschnitt P5 in seiner Domain 5 findet und etabliert. Eine Weiterleitung der Anfrage 18 durch den Manager 11 der Ziel-Domain 5 ist dann nicht mehr erforderlich.

Der Weg 19 der weitergeleiteten Pfadanfrage 18 durch die Domains 1, 2, 3 und 5 ist in der FIG 4 ebenfalls eingezeichnet.

Im Rahmen der Etablierung des Domain-übergreifenden Pfades P und zugehörigen Streams werden Domain-Ränder bildende Ports von Teilnehmern konfiguriert, insbesondere, indem ein VLAN-Austausch oder ein Austausch einer DMAC und eines VLANs eingestellt wird.

Im Anschluss an die Pfad- und Stream-Etablierung können Streamdaten über den Domain-übergreifenden Pfad P übertragen werden bzw. werden Streamdaten übertragen.

Es ist möglich, dass einer oder mehrere Router 20 in einem Netzwerk vorgesehen sind. Ist dies der Fall, kann wenigstens einer der Router 20 eine Router-Domain 21 bilden. Dies bedeutet insbesondere, dass der Router 20 eine eigene Domain, insbesondere TSN-Domain 21 bildet bzw. sich nach außen hin wie eine Domain, insbesondere TSN-Domain 21 verhält.

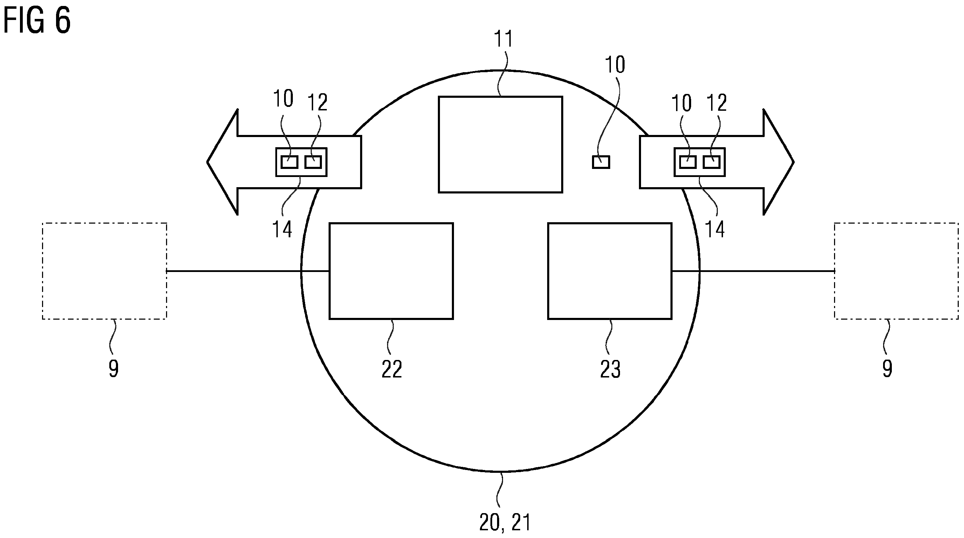

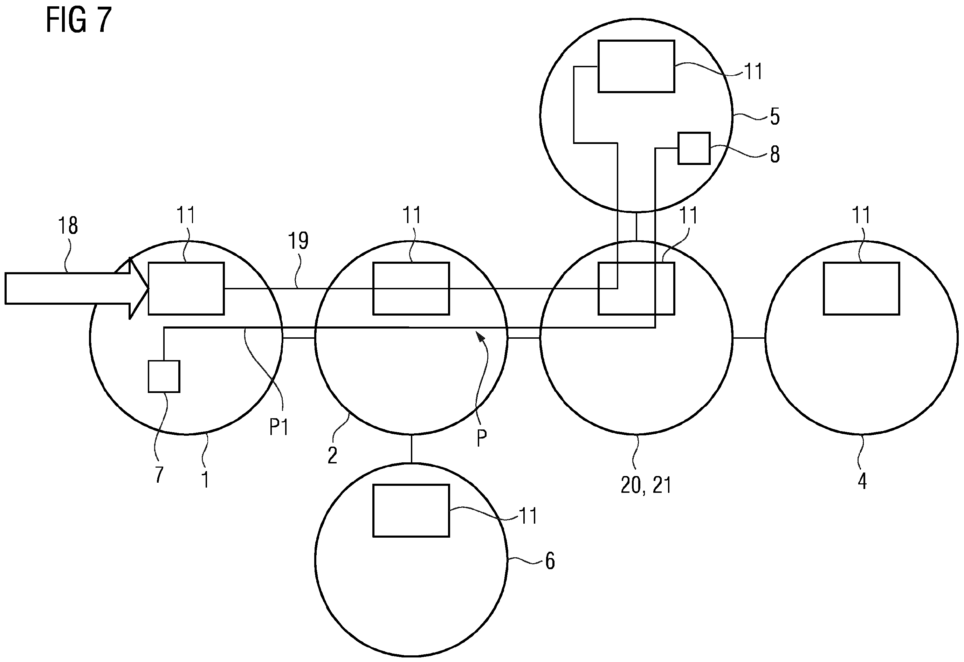

Einem eine (TSN-)Router-Domain 21 bildenden Router 20 ist dann ein eigener Domain-Kenner 10 zugeordnet und der Router 20 implementiert einen Domain-Manager 11 bzw. dem Router 20 ist ein Domain-Manager 11 zugeordnet. Dies ist in den Figuren 6 und 7 schematisch dargestellt, wobei die FIG 6 beispielhaft einen ein Router-Domain 21 bildenden Router 20 n vergrößerter Darstellung zeigt und die FIG 7 das Netzwerk aus FIG 1, wobei anstelle der Domain 3 mit mehreren Teilnehmern der Router 20 vorgesehen ist, welcher seinerseits eine Domain 21 bildet.

Wie man in FIG 6 erkennt, weist der Router zwei Ports 22, 23 auf und mit jedem Port 22, 23 ist eine Bridge 9 aus einer anderen, benachbarten Domain 2, 4 verbunden, konkret mit dem in FIG 6 linken Port 22 eine Bridge 9 aus der Domain 2 und mit dem rechten Port 23 eine Bridge aus der Domain 4. Die dargestellten Bridges 9 sind Rand-Bridges der Nachbar-Domains 2, 4.

Ein eine eigene Domain 21 bildender Router 20 verhält sich, was den Austausch von Teilnehmer- und Manager-Nachbar-Informationen angeht, wie eine nicht durch einen Router 20 gebildete Domain 1-6, mit der Maßgabe, dass der Router 20 zusätzlich zu erkennen gibt, dass er ein Router 20 ist. Er kann beispielsweise seinen Domain-Kenner 10 und/oder seinen Domain-Manager-Kenner 12 als Teilnehmer-Nachbar-Informationen 14 an Teilnehmer benachbarter Domains 2, 4 übermitteln. In Analogie zu den Domains 1-6 beispielsweise in Form von LLDP-DUs. Weiterhin kann er, nachdem eine Kommunikationsverbindung zwischen seinem Domain-Manager 11 und den Domain-Managern 11 benachbarter Domains 2, 4 aufgebaut wurde, den benachbarten Managern 11 seinen Domain-Kenner 10 und/oder seinen Domain-Manager-Kenner 12 zusammen mit einer Information "ich bin ein Router" übermitteln, dies bevorzugt ebenfalls via LRP over TCP. Er gibt auch die Info weiter, welche TSN-Domains 1-6 noch über ihn zu erreichen sind, wie in FIG 5 für ein Netz ohne Router 20 gezeigt. Eine Router TSN Domain 21 unterscheidet sich aus Sicht der Nachbarn nicht von den anderen TSN-Domains 1-6. Die Information "ich bin ein Router" ist eine optionale Zusatzinformation.

Die Teilnehmer-Nachbar-Informationen 14 und die Manager-Nachbar-Informationen 17 werden über den jeweiligen Port 22, 23 übertragen.

Der Domain-Manager 11 einer Router-Domain 21, der von einem Domain-Manager 11 einer benachbarten Domain 1-6 eine Anfrage für die Etablierung eines Pfades P zu einem Teilnehmer 7, 8 in einer anderen Domain 1-6 erhält, findet in völliger Analogie zu den Domain-Managern 11 klassischer Domains 1-6 einen Pfadabschnitt in seiner Domain 21 und gibt die Pfadanfrage 18 zusätzlich an denjenigen benachbarten Domain-Manager 11 weiter, der der anderen Domain 1-6 zugeordnet ist bzw. über den die andere Domain 1-6 gemäß der ausgetauschten Manager-Nachbar-Informationen 17 erreichbar ist. Die ist in der FIG 7 schematisch dargestellt, in welcher der Weg 19 der Pfadanfragen-Weitergabe und der Pfad P durch die Router-Domain 21 gehen. Es sei angemerkt, dass in einer Router TSN-Domain 21 ein Pfad bzw. Pfadabschnitt in der Regel dann gefunden ist, wenn die Ziel-TSN-Domain 1-6 über einen Port des Routers 20 erreichbar ist.

Dass ein Router eine (TSN-)Domain bildet bzw. sich nach außen als solche "ausgibt" bzw. verhält ermöglicht es insbesondere, dass beispielsweise IP/UDP Pakete über TSN-Streams zwischen unterschiedlichen IP Subnetzen - mit IP-Subnetzübergang - übertragen werden können.

Bevorzugt gibt nicht nur der Domain-Manager 11 einer Router-Domain 21 zu erkennen, dass seinen Domain ein Router 20 ist bzw. von einem solchen gebildet wird, sondern geben die Domain-Manager 11 von nicht durch Router 20 gebildeten Domains 1-6 auch zu erkennen geben, dass ihre Domains keine Router-Domains sind. Sie teilen insbesondere benachbarten Domain-Managern neben ihren Domain-Kennern und/oder Domain-Manager-Kennern mit, dass sie keine Router 20 sind bzw. dass ihre Domains 1-6 keine Router-Domains 21 sind. Bevorzugt ist diese Information Teil der ausgetauschten Manager-Nachbar-Informationen 17, die in FIG 17 schematisch dargestellt sind. Die Manager-Nachbar-Informationen 17 würden bei dem in FIG 5 gezeigten Beispiel, bei dem das Netzwerk keinen eine Router-Domain bildenden Router aufweist, alle die Information bzw. Angabe umfassen, dass der jeweilige Domain-Manager 11, von welchem die jeweilige Information stammt, kein Router ist bzw. dessen Domain nicht durch einen Router gebildet wird ("ich bin kein Router"). Bei dem in FIG 7 gezeigten Beispiel würde die Manager-Nachbar-Information 17, welche der Domain-Manager 11 des Routers 20 an den Manager von Domain 2 und 4 sendet umfassen, dass es sich um eine Router-Domain 21 handelt ("ich bin ein Router").

Der Austausch von Teilnehmer-Nachbar-Informationen 14 zwischen benachbarten Teilnehmern und die Erfassung der zugehörigen Objekte 10, 12 aus den MIBs 13 durch den jeweiligen Domain-Manager 11 und der Austausch von Manager-Nachbar-Informationen 17 zwischen benachbarten Domain-Managern 11 erfolgt bevorzugt zyklisch, beispielsweise alle 5 Sekunden. Alternativ oder zusätzlich kann die auch ereignisgesteuert erfolgen, etwa jedes Mal, wenn eine Veränderung erkannt wird. So ist der Stand immer aktuell und Veränderungen können erfasst werden.

Weiterhin sei angemerkt, dass alternativ dazu, dass es sich bei einem Domain-Manager 11 um eine zentrale Entität handelt, einer oder mehrere, ggf. alle Domain-Manager auch als verteilte bzw. distributierte Domain-Manager 24 implementiert sein können. Dann kann die (jeweils) zugehörige TSN-Domain 1-6 verteilt bzw. "distributed" verwaltet werden.

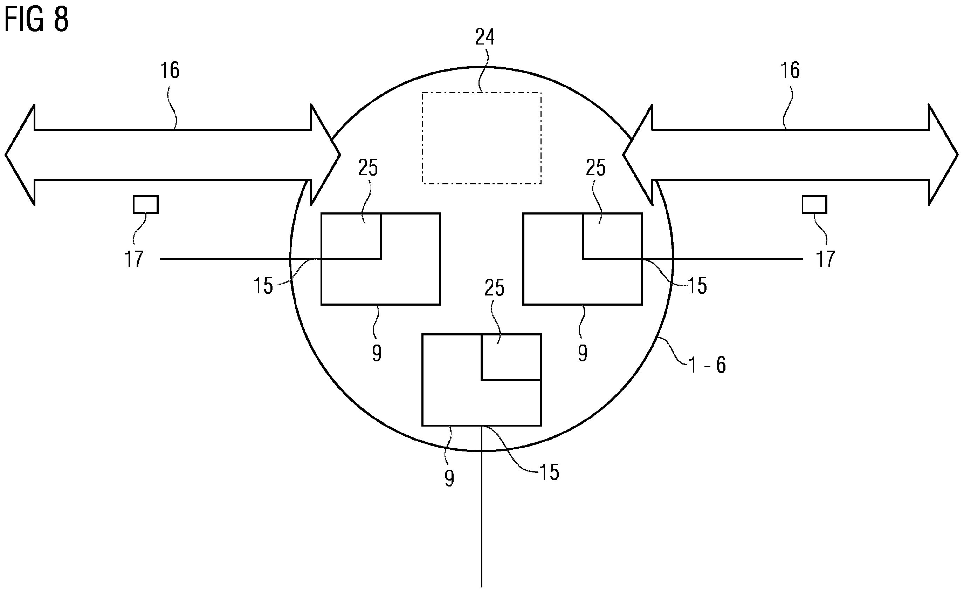

Es kann insbesondere vorgesehen sein, dass wenigstens ein Domain-Manager 24 zwei oder mehr Domain-Manager-Agenten 25 umfasst oder durch zwei oder mehr Domain-Manager-Agenten 25 gebildet wird, die bevorzugt auf verschiedenen Teilnehmern 9 seiner Domain 1-6 implementiert sind. Besonders bevorzugt ist im Falle einer verteilten Lösung auf jedem Rand-Teilnehmer 9 der (jeweiligen) Domain 1-6, konkret jedem Teilnehmer, der einen Port 15 hat, der mit dem Port 15 eines Teilnehmers 9 einer anderen Domain 1-6 verbunden ist, wenigsten ein Domain-Manager-Agent 25 implementiert. Die Domain-Manager-Agenten 25 bilden dann insbesondere gemeinsam einen "virtuellen" Domain-Manager 24 und können die Kommunikation zu den Domain-Managern 11, 24 (ggf. zu Domain-Manager-Agenten 25 dieser) der benachbarten Domain(s) 1-6 übernehmen. Der durch die verteilten Agenten 25 gebildete "virtuelle" Domain-Manager 24 ist in der FIG 8 mit strichpunktierter Linie dargestellt.

Die Domain-Manager-Agenten 25 einer Domain 1-6 bzw. eines Domain-Managers 24 können miteinander kommunizieren, um benötigte Informationen für die inter-Domain-Kommunikation zu erhalten. Wie beispielhaft in der FIG 8 dargestellt, implementiert dann insbesondere jede Rand-Bridge 9 einer Domain 1-6 einen Domain-Manager-Agenten 25. Die Agenten 25 übernehmen sozusagen stellvertretend für einen zentralen/dedizierten Domain-Manager 11 die Kommunikation zu den (dedizierten oder verteilten) Domain-Managern 11, 24 der benachbarten Domains 1-6.

Beispielsweise könnte der Domain-Manager der Domain 3 aus der FIG 1 durch einen "virtuellen" Domain-Manager 24 mit mehreren verteilten Domain-Manager-Agenten 25 gebildet werden, wie in FIG 8 dargestellt. Die Weitergabe der Anfrage 18 würde in diesem Falle genauso über den Weg 19 erfolgen, wie in FIG 4 für den Fall zentraler Domain-Manager 11 dargestellt, wobei diese in der Domain 3 von den Domain-Manager-Agenten 25 abgewickelt wird, und der Pfad P bzw. die Pfadabschnitte P1-P3, P5 wären gleich. Natürlich ist es auch möglich, dass die Domain-Manager mehrere oder jeder der Domains 1-6 aus FIG 1 jeweils durch mehrere, verteilte Domain-Manager-Agenten 25 gebildet werden.

Was die Pfad- und Stream-Etablierung in den einzelnen Domains 1-6 durch jeden der beteiligten Domain-Manager 11, 24 angeht, kann diese prinzipiell auf an sich bekannte Weise, insbesondere wie in IEEE 802.Qcc beschrieben, erfolgen.

Durch die vorstehend beschriebene erfindungsgemäße Vorgehensweise werden die Probleme gelöst, wer im Falle einer TSN-Domain-übergreifenden Kommunikation für das Finden und insbesondere die Etablierung von Pfaden P und Streams zuständig ist und wie man die Ziel-TSN-Domain und einen Weg von einem Gerät 7,8 in einer TSN-Domain 1-6 zu einem Gerät 7, 8 in einer anderen TSN-Domain 1-6 findet. Das erfindungsgemäße Vorgehen vermeidet dabei, dass ein Domain-Manager 11, 24 mehr als seine Teilnehmer, also mehr als die Teilnehmer 7-9 seiner Domain 1-6 kennen muss. Auch ohne alle Teilnehmer 7-9 aller Domains 1-6 zu kennen, kann man Pfade und Streams zwischen ihnen etablieren.

Dies erfolgt dabei automatisch, ohne dass es eines Eingreifens bzw. einer Konfiguration durch einen Benutzer bedarf. TSN-Domains 1-6 können dynamisch aneinander andocken bzw. abdocken. Es können beispielsweise neue TSN-Domains hinzukommen, TSN-Domains wegfallen oder auch TSN-Domains ihren "Andockpunkt" wechseln, ohne dass ein Engineering Tool eine (neue) Gesamt-Topologie konfigurieren muss.

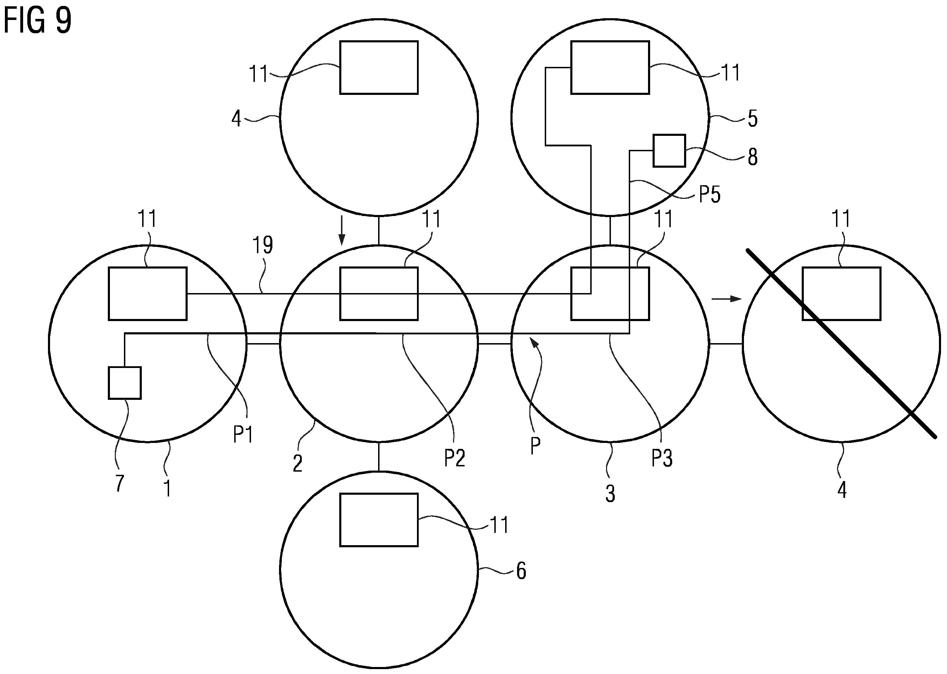

Der Wechsel des "Andockpunktes" einer TSN-Domain 4 ist rein schematisch in FIG 9 dargestellt. Konkret wird die Domain 4 von der Domain 3 "abgekoppelt" und an die Domain 2 "angekoppelt". Bei dem dargestellten Beispiel wird die Domain 4 durch ein Autonomous Guided Vehicle gebildet, welches ein Beispiel für eine bewegliche Maschine darstellt, die an verschiedenen Teilen einer Anlage und damit an verschiedenen TSN-Domains 1-6 andocken kann bzw. andockt, wenn es beispielsweise herumfährt, um Waren aufzunehmen und/oder abzuladen. Durch die erfindungsgemäße Vorgehensweise findet automatisch eine Aktualisierung der Wegeinformation "über welche Domainverbindung erreiche ich welche andere Domain oder Domains" statt und es kann auch bei einem solchen (ggf. mehrmaligen) Wechsel die Domain wieder gefunden werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenkommunikation in einem insbesondere industriellen Netzwerk, das mehrere Domains (1-6), insbesondere TSN-Domains umfasst,
wobei zu jeder Domain (1-6) einer oder mehrere Teilnehmer (7-9) gehören und jeder Domain (1-6) ein Domain-Kenner (10) zugeordnet ist oder wird, der dem oder den Teilnehmern (7-9) der jeweiligen Domain (1-6) bekannt ist oder bekannt gegeben wird,
und jeder Domain (1-6) ein Domain-Manager (11, 24) zugeordnet ist oder wird, der für das Finden von Pfaden (P) bzw. Pfadabschnitten (P1-P3, P5) in der jeweiligen Domain (1-6) zuständig ist und dem ein Domain-Manager-Kenner (12) zugeordnet ist oder wird,
wobei dem oder den Teilnehmern (7-9) jeder Domain (1-6) der Domain-Manager-Kenner (12) des zu ihrer Domain (1-6) gehörigen Domain-Managers (11, 24) bekannt ist oder gegeben wird, und die Teilnehmer (7-9) der Domains (1-6) die Domain-Kenner (10) und die Domain-Manager-Kenner (12) ihrer Domain (1-6) jeweils mit benachbarten Teilnehmern (7-9) austauschen und diese ausgetauschten Teilnehmer-Nachbar-Informationen (14) von den Teilnehmern (1-6) gespeichert werden,
und die Domain-Manager (11, 24) die von den Teilnehmern (7-9) ihrer Domain (1-6) gespeicherten Teilnehmer-Nachbar-Informationen (14) erfassen und so die Domain-Manager-Kenner (12) der Domain-Manager (11, 24) benachbarter Domains (1-6) erhalten,
und die Domain-Manager (11, 24) unter Nutzung der erhaltenen Domain-Manager-Kenner (12) mit benachbarten Domain-Managern (11, 24) kommunizieren und Manager-Nachbar-Informationen (17) austauschen, wobei die Domain-Manager (11, 24) benachbarten Domain-Managern (11, 24) jeweils ihren eigenen Domain-Kenner (10) und eine Information ob, und wenn ja, welche weiteren Domains (1-6) der jeweilige Nachbar über den jeweiligen Domain-Manager (11, 24) erreichen kann, mitteilen,
und die Manager-Nachbar-Informationen (17) genutzt werden, um wenigstens einen Pfad (P)zwischen zwei in verschiedenen Domains (1-6) befindlichen Teilnehmern (7-9) zu finden.

2. Verfahren nach Anspruch 1,
**dadurch gekennzeichnet, dass**
ein Domain-Manager (11, 24), der von einem benachbarten Domain-Manager (11, 24) neben dessen Domain-Kennung (10) die Manager-Nachbar-Information (17) erhält, welche Domains (1-6) über den benachbarten Domain-Manager (11, 24) noch erreichbar sind, diese Information an einen oder mehrere andere benachbarte Domain-Manager (11, 24), sofern vorhanden, weitergibt.

3. Verfahren nach Anspruch 1 oder 2,
**dadurch gekennzeichnet, dass**
ein Domain-Manager (11, 24), der einem Teilnehmer (7-9) seiner Domain (1-6) oder einem Domain-Manager (11, 24) einer benachbarten Domain (1-6) eine Anfrage (18) für die Etablierung eines Pfades (P) zu einem Teilnehmer in einer anderen Domain (1-6) erhält, einen Pfadabschnitt (P1-P3, P5) in seiner Domain (1-6) findet und die Pfadanfrage (18) zusätzlich an denjenigen benachbarten Domain-Manager (11, 24) weiterleitet, der der anderen Domain (1-6) zugeordnet ist bzw. über den die andere Domain (1-6) gemäß der ausgetauschten Manager-Nachbar-Informationen (17) erreichbar ist.

4. Verfahren nach einem der vorhergehenden Ansprüche,
**dadurch gekennzeichnet, dass**
ein Domain-Manager (11, 24), der von einem Teilnehmer seiner Domain (1-6) oder einem anderen Domain-Manager (11, 24) eine Anfrage (18) für die Etablierung eines Pfades (P) bzw. Pfadabschnittes (P1-P3, P5) zu einem Teilnehmer (7-9) seiner Domain (1-6) erhält, in seiner Domain (1-6) einen Pfad (P) bzw. Pfadabschnitt (P1-P3, P5) zu diesem findet und insbesondere etabliert.

5. Verfahren nach einem der vorhergehenden Ansprüche,
**dadurch gekennzeichnet, dass**
wenigstens einer der Domain-Manager (24) zwei oder mehr Domain-Manager-Agenten (25) umfasst oder durch zwei oder mehr Domain-Manager-Agenten (25) gebildet wird.

6. Verfahren nach einem der vorhergehenden Ansprüche,
**dadurch gekennzeichnet, dass**
eine Anfrage (18) für die Etablierung eines Pfades (P) von einem Teilnehmer (7-9) in einer Domain (1-6) zu einem Teilnehmer in der gleichen Domain (1-6) die Angabe der beiden Teilnehmer (7-9) umfasst, und/oder dass eine Anfrage (18) für die Etablierung eines Pfades (P) von einem Teilnehmer (7-9) in einer Domain (1-6) zu einem Teilnehmer (7-9) in einer anderen Domain (1-6) zusätzlich zu der Angabe der beiden Teilnehmer (7-9) die Angabe deren Domains (1-6) enthält.

7. Verfahren nach einem der vorhergehenden Ansprüche,
**dadurch gekennzeichnet, dass**
den Teilnehmern (7-9) der Domain-Kenner (10) ihrer Domain (1-6) und/oder der Domain-Manager-Kenner (12) des Domain-Managers (11, 24) ihrer Domain (1-6) als Objekt in einer Management-Information-Datenbank (13) bekannt gegeben wird oder ist.

8. Verfahren nach einem der vorhergehenden Ansprüche,
**dadurch gekennzeichnet, dass**
die Teilnehmer-Nachbar-Informationen (14) über ein Protokoll ausgetauscht werden, wobei die Domain-Kenner (10) und/oder die Domain-Manager-Kenner (12) bevorzugt als TLVs in Protokollnachrichten, insbesondere LLDP-DUs ausgetauscht werden.

9. Verfahren nach einem der vorhergehenden Ansprüche,
**dadurch gekennzeichnet, dass**
im Rahmen der Etablierung eines Pfades (P) zwischen einem Teilnehmer (7-9) in einer Domain und einem Teilnehmer (7-9) in einer anderen Domain (1-6) Domain-Ränder bildende Ports von Teilnehmern (7-9) konfiguriert werden.

10. Verfahren nach einem der vorhergehenden Ansprüche,
**dadurch gekennzeichnet, dass**
die Kommunikation zwischen Domain-Managern (11, 24) über LRP über TCP erfolgt.

11. Verfahren nach einem der vorhergehenden Ansprüche,
**dadurch gekennzeichnet, dass**
wenigstens ein Router (20) in dem Netzwerk vorgesehen ist, der eine Router-Domain (21) bildet und dem ein Domain-Kenner (10) zugeordnet ist und der einen Domain-Manager (11, 24) implementiert oder dem eine solcher zugeordnet ist, und der sich, was den Austausch von Teilnehmer- (14) und Manager-Nachbar-Informationen (17) angeht, wie eine nicht durch einen Router (20) gebildete Domain (1-6) verhält, mit der Maßgabe, dass er zusätzlich zu erkennen gibt, dass er ein Router (20) ist.

12. Verfahren nach Anspruch 11,
**dadurch gekennzeichnet, dass**
die Domain-Manager (11, 24) von nicht durch Router (20) gebildeten Domains (1-6) zu erkennen geben, dass ihre Domains (1-6) keine Router-Domains sind.

13. Netzwerk, insbesondere für eine Automatisierungsanlage und/oder Fertigungsanlage, das zur Durchführung des Verfahrens nach einem der Ansprüche 1 bis 12 ausgebildet und eingerichtet ist.

14. Computerprogramm umfassend Programmcode-Mittel zur Durchführung des Verfahrens nach einem der Ansprüche 1 bis 12.

15. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 12 durchzuführen.
